Europäisches Patentamt

European Patent Office

Office européen des brevets

(19)

(11) Numéro de publication: **0 263 765**
**A1**

(12) # DEMANDE DE BREVET EUROPEEN

(21) Numéro de dépôt: 87420266.6

(22) Date de dépôt: 01.10.87

(51) Int. Cl.4: **H 04 N 5/20**

(30) Priorité: 07.10.86 FR 8614078

(43) Date de publication de la demande:
13.04.88 Bulletin 88/15

(84) Etats contractants désignés:
BE CH DE ES FR GB IT LI NL SE

(71) Demandeur: SOCIETE D'ETUDE DU SIGNAL
27, rue François Gillet
F-42400 Saint Chamond (FR)

(72) Inventeur: Jourlin, Michel
10, rue Victor Gomy
F-42100 St Etienne (FR)

Barreault, Gérard
16, rue Léon Granier
F-69110 Ste-Foy-Les-Lyon (FR)

Porte, Catherine
83, rue des Aqueducs
F-69005 Lyon (FR)

Pinoli, Jean-Charles
Route d'Unias
Craintilleur F-42210 Montrond-Les-Bains (FR)

(74) Mandataire: Laurent, Michel et al
Cabinet LAURENT et GUERRE B.P. 32
F-69131 Ecully Cedex (FR)

(54) Dispositif de transformation d'un signal par stabilisation et rehaussement de la dynamique dudit signal.

(57) Dispositif de transformation d'un signal par stabilisation et rehaussement de la dynamique comportant une source, un recepteur des ondes et un système d'exploitation.

Il comporte entre le récepteur et le système d'exploitation un ensemble réhauseur de la dynamique et stabilisateur, constitué :
- de moyens pour mesurer des valeurs caractéristiques de la fonction f représentative dudit signal ;
- de moyens pour déterminer pour cette fonction les uniques rapport d'homothétie $K_0$, $K_1$, $K_2$, $K_3$, tels qu'une loi de composition externe notée $\triangle$, qui à tout réel K associe la fonction $K \triangle f$, définie par l'expression : $K \triangle f = M - M ( 1 - \frac{f}{M} )^K$ (M : maximum théroique de f) ait la meilleure plage dynamique ;
- de moyens pour calculer les fonctions $K_0 \triangle f$, $K_1 \triangle f$, $K_2 \triangle f$ et $K_3 \triangle f$ ;
- de moyens pour la transmission au système d'exploitation des valeurs ainsi déterminées.

FIG. 1

## Description

## DISPOSITIF DE TRANSFORMATION D'UN SIGNAL PAR STABILISATION ET REHAUSSEMENT DE LA DYNAMIQUE DUDIT SIGNAL.

La présente invention concerne un dispositif de transformation d'un signal par stabilisation et réhaussement de la dynamique dudit signal , correspondant parfois au contraste, notamment dans le cas d'images .

Actuellement, un grand nombre de techniques, notamment d'analyse, font appel à l'utilisation d'un signal, en particulier d'un signal optique, acoustique, ou électrique, et de façon générale à une onde, émise par l'objet, la surface, ou le matériau soumis à l'analyse. Cette analyse est effectuée soit directement, soit indirectement, et dans ce dernier cas, le signal capté est un signal transmis, si l'objet ou la surface est perméable audit signal, ou un signal réfléchi dans les autres cas.

Toutefois, l'un des inconvénients de ces systèmes réside dans le fait que le signal obtenu après traitement dépend de façon assez conséquente des conditions d'analyse d'une part, et d'autre part, manque souvent de dynamique d'où une interprétation quelquefois hasardeuse voire erronée.

On connait des moyens aptes à réhausser la dynamique de tels signaux. Ils sont généralement constitués par des amplificateurs et des filtres. Toutefois, avec ces systèmes, toute variation du flux de l'onde captée entraîne une variation de l'amplitude du signal, même si l'objet ou la surface analysée est la même. En effet, les gains obtenus au moyen de l'amplificateur ne donnent pas les mêmes résultats. On observe donc une certaine distorsion au niveau de la restitution du signal.

Afin d'éviter ces distorsions, on utilise alors des organes de "commande automatique de gain" . Malgré cela, les résultats obtenus sont généralement insuffisants, et ces organes sont spécifiques d'une application donnée.

L'invention pallie ces inconvénients. Elle concerne un dispositif qui restitue, après traitement, un signal stabilisé présentant une dynamique optimale et ce, quelles que soient les conditions initiales de réception dudit signal, comportant :

- une source générant un flux d'ondes, susceptible de présenter des variations au cours du temps ;
- un récepteur des ondes transmises ou réfléchies, générées par ladite source, ledit récepteur étant destiné à transformer ces ondes en signaux électriques-analogiques ou numériques ;
- un système d'exploitation du signal ainsi transformé.

L'invention se caractérise en ce que ce dispositif comporte entre le récepteur et le système d'exploitation un ensemble réhausseur de la dynamique et de stabilisation de ce signal, constitué :

- de moyens pour mesurer des valeurs caractéristiques de la fonction représentative du signal issu du recepteur, choisies dans le groupe comprenant :
. le minimum et le maximum de cette fonction ;
. la moyenne logarithmique de cette fonction ;
. l'écart-type logarithmique de l'histogramme de cette fonction ;
. la variation logarithmique de cette fonction; - de moyens pour déterminer pour cette fonction, les uniques rapports d'homothétie $K_0$, $K_1$, $K_2$, $K_3$ , dénommés coefficients invariants, c'est-à-dire les nombres réels $K_0$, $K_1$, $K_2$, $K_3$, tels qu'une loi de composition externe notée $\triangle$, qui à toute fonction f, représentative du signal, et à tout réel K, associe la fonction $K \triangle f$, définie par l'expression:

$$K \triangle f = M - M \left(1 - \frac{f}{M}\right)^K$$

où M représente le maximum théorique de la fonction f, ait la meilleure plage dynamique ; les rapports $K_0$, $K_1$, $K_2$, $K_3$ étant déterminés comme suit :

. pour $K_0$ :
* on calcule pour le maximum $f_{max}$ et le minimum $f_{min}$ déterminés lors de l'une des étapes précédentes , la valeur littérale de la fonction $K \triangle f$ ;
* on détermine également littéralement la valeur de la différence des deux expressions calculées au cours de l'étape précédente :
$$K \triangle f_{max} - K \triangle f_{min}$$
* on dérive par rapport au réel K l'expression obtenue ;
* on identifie alors la fonction dérivée obtenue à zéro, afin de déterminer le réel $K_0$ ;
. pour $K_1$ :
* on calcule la moyenne au sens classique m de la fonction

$$- \mathrm{Log}\left(\frac{M - f}{M}\right)$$

* on en déduit la moyenne logarithmique de la fonction f à l'aide de la formule :
$$m = M - M\, e^{-m'} ;$$
* on détermine le réel $K_1$ comme étant la solution de l'équation $K_1 \triangle m = \frac{M}{2}$ ;
. pour $K_2$ :
* on calcule la moyenne au sens classique de la fonction

$$- \operatorname{Log} \left( \frac{M - f}{M} \right)$$

ainsi que l'écart-type au sens classique $\sigma$ de son histogramme;
* on en déduit la moyenne logarithmique de la fonction f à l'aide de la formule :
$m = M - M\, e^{-m'}$
ainsi que l'écart-type logarithmique de l'histogramme de la fonction f par la formule :
$\sigma = M - M\, e^{-\sigma'}$ ;
* on détermine alors littéralement la valeur de la différence des expressions :

$$K \underset{X}{\triangle} \left( m + \triangledown - \frac{m\triangledown}{M} \right) \quad \text{et} \quad K \underset{X}{\triangle} \left( M \, \frac{m - \triangledown}{M - \triangledown} \right) \quad ;$$

* on dérive par rapport au réel K l'expression obtenue ;
* on identifie alors la fonction dérivée obtenue à zéro, afin de déterminer le réel $K_2$ ;
. pour $K_3$ :
* on calcule la moyenne au sens classique m de la fonction

$$- \operatorname{Log} \left( \frac{M - f}{M} \right)$$

ainsi que la variation classique v' définie par :

$$\sum \left| m' + \operatorname{Log} \left( \frac{M - f}{M} \right) \right|$$

pixels de l'image
où | | désigne la valeur absolue ;
* on en déduit la moyenne logarithmique de la fonction f par la formule :
$v = M - M\, e^{-v'}$
* on détermine alors littéralement la valeur de la différence des expressions :

$$K \underset{X}{\triangle} \left( m + v - \frac{m\,v}{M} \right) \quad \text{et} \quad K \underset{X}{\triangle} \left( M \, \frac{m - v}{M - v} \right)$$

* on dérive par rapport au réel K l'expression obtenue ;
* on identifie alors à zéro la fonction dérivée obtenue afin de déterminer le réel $K_3$ ;
- de moyens pour calculer les fonctions $K_0 \triangle f$, $K_1 \triangle f$, $K_2 \triangle f$, $K_3 \triangle f$ correspondantes ;
- de moyens pour la transmission au système d'exploitation des valeurs ainsi déterminées.

En d'autres termes, l'invention se caractérise en ce qu'elle intégre au sein d'une série d'organes de traitement de signal, un moyen apte à apporter la meilleur dynamique aux différents signaux de la gamme offerte par les dits signaux.

Avantageusement, en pratique :
- on détermine les valeurs caractéristiques dudit signal, qu'il soit de nature analogique ou numérique, à savoir, le minimum et le maximum du signal, sa moyenne logarithmique, l'écart-type logarithmique ainsi que la variation logaritmique de ce signal au moyen d'un premier organe de calcul ;
- le calcul des réels $K_0$, $K_1$, $K_2$ et $K_3$ est effectué au moyen d'un second organe de calcul ;
- le calcul de la valeur de $K_0 \triangle f$, $K_1 \triangle f$, $K_2 \triangle f$ et $K_3 \triangle f$ est effectué au moyen d'un trosième organe de calcul ;
- les signaux captés , appartiennent au groupe constitué par les ondes acoustiques, ultra-sonores, infra-rouge, visibles, ultra-violet, rayons X et rayons gamma .

La manière dont l'invention peut être réalisée et les avantages qui en découlent ressortiront mieux des exemples de réalisation qui suivent, donnés à titre indicatif et non limitatif, à l'appui des figures annexées.

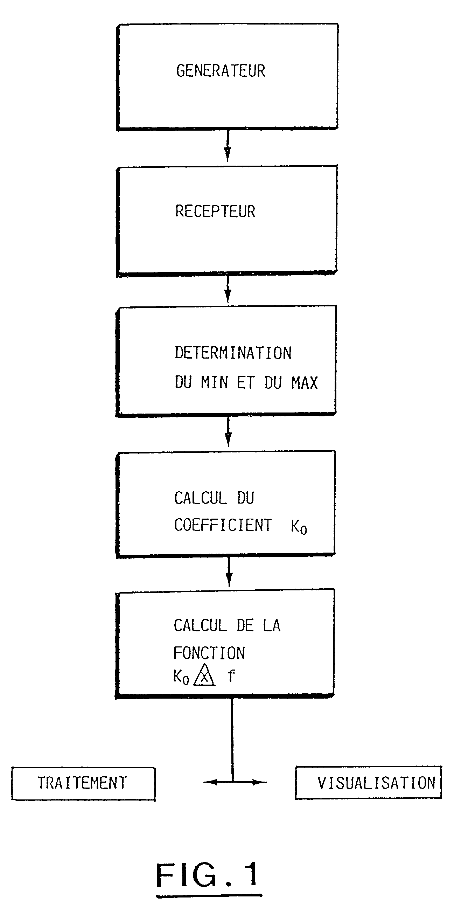

La figure 1 est un synoptique général représentatif des différents organes constituant ledit système de traitement selon l'invention, dans la version du calcul de $K_0$

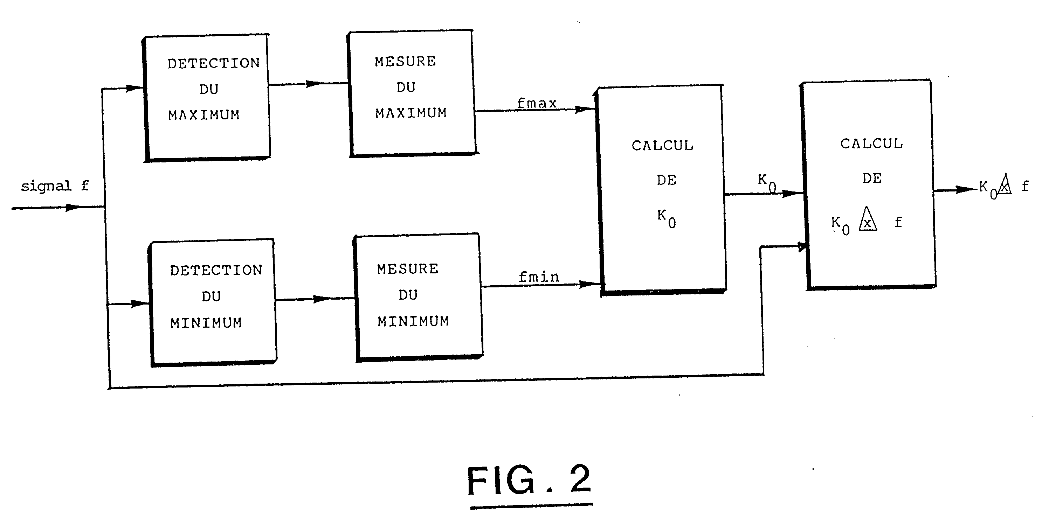

La figure 2 est un synoptique représentatif des phases principales du traitement de signal, dans la même version.

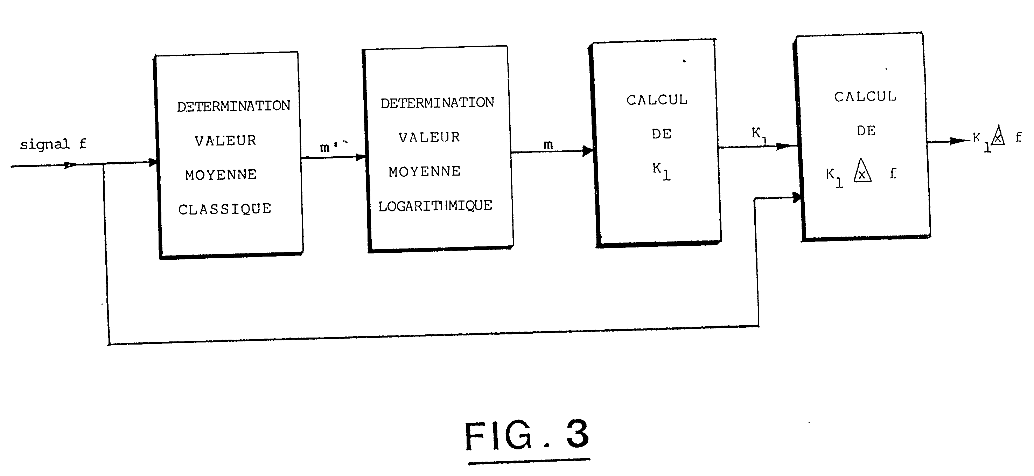

La figure 3 est un synoptique représentatif des phases principales du traitement de signal dans la version du calcul de $K_1$ .

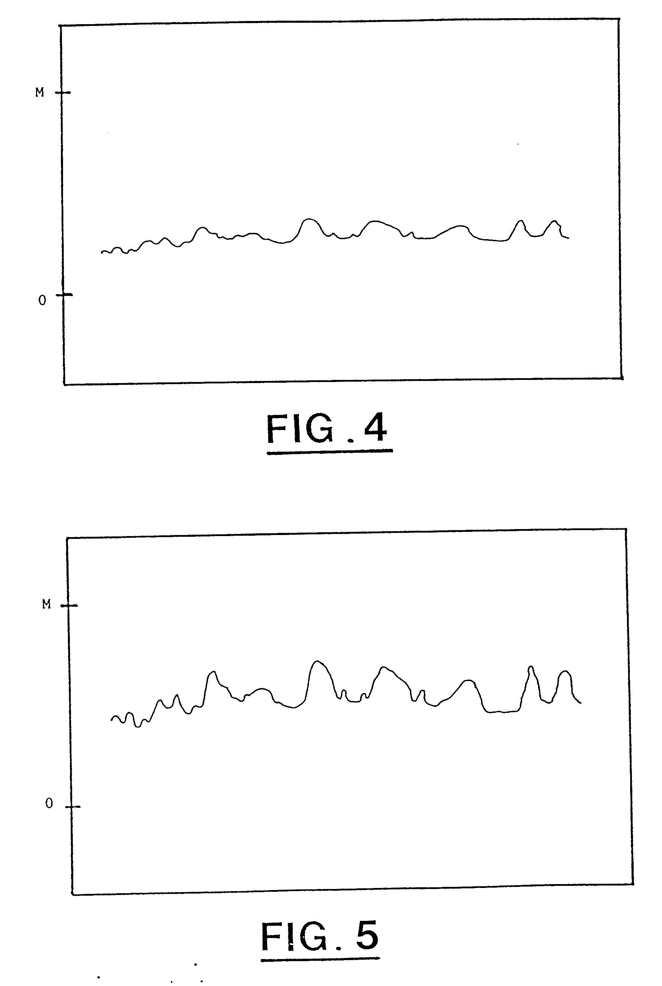

La figure 4 est un graphique représentant dans l'échelle des gris un signal avant-traitement pour signal vidéo alors que la figure 5 est un graphique représentatif du même signal mais après traitement toujours dans l'échelle des gris.

Selon l'invention, le dispositif de transformation du signal par stabilisation et réhaussement de la dynamique dudit signal est située entre le récepteur de ce signal et le système d'exploitation du signal ainsi traité.

Le générateur du signal peut être de différentes natures, en particulier générateur d'ondes électromagnétiques du type optique, acoustique ou générateur de rayons X, rayons gamma ou d'ultra-sons. Le récepteur utilisé est fonction du signal analysé. Ainsi, dans le cas de la lumière visible ou de signaux infra-rouge, le récepteur est une caméra ou des systèmes de type photographique ; dans le domaine de l'acoustique et des ultra-sons,le récepteur est un sonar, un radar, un microphone ou un accéléromètre ; dans le cas de rayons X ou de rayons gamma, le récepteur est constitué d'un scanneur ou d'une caméra spécialisée.

Le récepteur est donc susceptible de capter une onde électromagnétique, ledit récepteur étant adapté au domaine de l'onde électromagnétique constituant le signal analysé.

Il est à noter que, outre son rôle de capteur, le récepteur joue également un rôle de convertisseur des signaux captés, en général des signaux sous forme d'ondes électromagnétiques en signaux électriques-analogiques ou numériques, et ce au moyen d'un convertisseur analogique-numérique .

De manière connue, un organe détermine au sein de l'ensemble des signaux qui lui sont transmis le minimum et le maximum. On utilise pour ce faire des comparateurs.

Une fois le minimum et le maximum d'un ensemble de signaux déterminés, un calculateur ou un système éléctronique ou de traitement spécialisé détermine les valeurs caractériques suivantes :
- la moyenne logarithmique m de la fonction représentative du signal ;
- l'écart-type logarithmique $\sigma$ de l'histogramme de cette fonction ;
- la variation logarithmique v de cette fonction .

A partir de ces valeurs caractéristiques d'un ensemble de signaux donnés, un deuxième calculateur ou système éléctronique ou de traitement spécialisé détermine la valeur des coefficients invariants $K_0$ , $K_1$ , $K_2$ et $K_3$. Ces nombres $K_0$ , $K_1$ , $K_2$ et $K_3$ qui sont des nombres réels, sont déterminés de telle sorte qu'au moyen de la loi de composition externe notée $\triangle$, qui à la fonction f représentative de l'ensemble des signaux analysés, et à tout réel K associe la fonction $K \triangle f$ définie par l'expression :

$$K \triangle f = M - M \left(1 - \frac{f}{M}\right)^K$$

où M représente le maximum théorique de la fonction f, $K_0$, $K_1$, $K_2$ et $K_3$ réalisant respectivement les fonctions $K_0 \triangle f$, $K_1 \triangle f$, $K_2 \triangle f$, $K_3 \triangle f$ qui ont la meilleure plage dynamique au sens respectivement de la maximisation de la plage des valeurs du signal analysé, du centrage de la moyenne, de l'étalement maximal de l'écart-type de l'histogramme dudit signal, et enfin de l'étalement maximal de la variation dudit signal.

Par maximum théorique de la fonction f, on entend en fait le plus grand nombre de niveaux que peut prendre ladite fonction f . Ainsi, si le système d'exploitation correspond à un écran de visualisation noir et blanc de 256 niveaux de gris s'étendent de 0 à 255, le nombre M est égal à 255.

Ces nombres réels $K_0$, $K_1$, $K_2$ et $K_3$, comme déjà dit sont déterminés au moyen d'un second organe de calcul tel qu'un calculateur, un système éléctronique ou de traitement spécialisé, qui effetue les différentes phases de calcul suivantes :
. pour $K_0$ :
- le maximum $f_{max}$ et le minimum $F_{min}$ de l'ensemble des signaux transmis étant déterminés, le second organe de calcul , du même type que le dit premier organe de calcul détermine la valeur littérale de l'expression $K \triangle f_{max}$ et $K \triangle f_{min}$ ;
- une fois cette valeur littérale déterminée, cet organe de calcul détermine, également littéralement, la valeur de la différence des deux expressions calculées au cours des étapes précédentes, c'est-à-dire l'expression pour le maximum et l'expression pour le minimum ;
- le det premier organe de calcul dérive alors par rapport au réel K l'expression obtenue ;
- on identifie alors la fonction dérivée obtenue à zéro afin de déterminer le réel $K_0$. L'une des expressions obtenues a la forme suivante :

$$K_0 = \frac{Log \, \dfrac{Log\left(1 - \dfrac{f_{max}}{M}\right)}{Log\left(1 - \dfrac{f_{min}}{M}\right)}}{Log \, \dfrac{(M - f_{max})}{(M - f_{min})}}$$

. pour $K_1$ :
le second organe de calcul determine la valeur de $K_1$ comme étant la solution de l'équation :
$$K_1 \triangle m = \frac{M}{2}$$
L'une des expressions obtanues a la forme suivante :

$$K_1 = \frac{\text{Log} \; \frac{1}{2}}{\text{Log} \; ( \frac{M - m}{M} )}$$

. pour $K_2$ :
- le second organe de calcul determine la valeur littérale de l'expression :

$$K \triangle x \; (m + \triangledown - \frac{m\triangledown}{M}) \; et \; K \triangle x \; (M \; \frac{m - \triangledown}{M - \triangledown});$$

- une fois cette valeur littérale determinée, l'organe de calcul détermine également littéralement, la valeur de la différence des deux expressions calculées au cours des étapes précédentes ;
- le dit second organe de calcul dérive alors par rapport au réel K l'expression obtenue ;
- on identifie alors la fonction dérivée obtenue à zéro afin de déterminer le réel $K_2$ .

L'une des expressions obtenues a la forme suivante :

$$K_2 = \frac{\text{Log} \; \dfrac{\text{Log} \left( 1 - \dfrac{m + \triangledown - \frac{m\triangledown}{M}}{M} \right)}{\text{Log} \left( 1 - \dfrac{(m - \triangledown)}{M - \triangledown} \right)}}{\text{Log} \; \dfrac{(M - m - \triangledown + \frac{m\triangledown}{M})}{(M - M \; (\frac{m - \triangledown}{M - \triangledown})}}$$

. pour $K_3$ :
- le second organe de calcul determine la valeur littérale de l'expression :

$$K \triangle x \; (m + v - \frac{mv}{M}) \; et \; K \triangle x \; (M \; \frac{m - v}{M - v})$$

- une fois cettte valeur littérale déterminée , cet organe de calcul détermine, également littéralement, la valeur de la différence des deux expressions calculées lors de l'étape précédente ;
- le dit second organe de calcul dérive alors par rapport au réel K l'expression obtenue ;
- on identifie alors à zéro la fonction dérivée ainsi obtanue, afin de déterminer le réel $K_3$ .

L'une des expressions obtenues a la forme suivante :

$$K_3 = \frac{\text{Log} \; \dfrac{\text{Log} \left( 1 - \dfrac{m + v - \frac{mv}{M}}{M} \right)}{\text{Log} \left( 1 - \dfrac{m - v}{M - v} \right)}}{\text{Log} \; \dfrac{(M - m + v + \frac{mv}{M})}{(M - M \; \frac{m - v}{M - v})}}$$

Le choix du paramètre adéquat parmi $K_0$, $K_1$, $K_2$ et $K_3$ est laissé à la charge de l'utilisateur en fonction de la nature du signal étudié et du traitement à lui faire subir, $K_1$ réalisant essentiellement le centrage du dit signal dynamique, $K_0$, $K_2$ et $K_3$ opérant à la fois le centrage et le réhaussement. $K_0$ est un paramètre simple pour sa mise en oeuvre,et rapide en traitement. $K_2$ et $K_3$ correspondent à des approches statitiques plus sophistiquées,le premier travaillant sur l'histogramme et le deuxième sur la fonction. L'avantage donné par $K_0$ est de ne pas rester inopérant sur un signal mal centré en moyenne et présentant cependant des maxima et/ou des minima voisins de M et O respectivement.

Le second organe de calcul a donc ainsi déterminé une expression permettant d'obtenir le meilleur rapport d'homothétie également dénommé coefficient invariant afin de dynamiser au maximum la plage des valeurs du signal analysé. En d'autres termes,cette expression permet de calculer pour le signal analysé l'unique représentation faisant apparaître les plus grandes variations des valeurs dudit signal. Ainsi, quelles que soient les conditions d'obtention et de réception du signal analysé, le résultat obtenu reste toujours le même avec une dynamique optimale , et une stabilisation c'est-à-dire une unicité quant à la restitution dudit signal au moyen de l'expression ainsi calculée.

Il est à noter que l'expression des coefficients $K_0$ $K_1$, $K_2$ et $K_3$ obtenue précédemment peut se présenter sous une autre forme mathématique étant entendu que le résultat donné pour ces coefficients est toujours le même.

Dans l'exemple de réalisation décrit, les calculateurs permettant d'une part la détermination de la valeur des coefficients $K_0$ , $K_1$ , $K_2$ et $K_3$ et d'autre part la détermination de la valeur de $K_0 \triangle f$, $K_1 \triangle f$, $K_2 \triangle f$ et $K_3 \triangle f$ sont des circuits ou sous-ensembles électroniques. Lorsque chacune des valeurs des fonctions $K_0 \triangle f$, $K_1 \triangle f$, $K_2 \triangle f$ et $K_3 \triangle f$ est calculée sous forme numérique , le résultat peut être transformé en signal électrique au moyen d'un convertisseur numérique analogique et ce , de façon tout à fait classique. Le traitement peut également être entièrement réalisé sous forme analogique.Le système d'exploitation utilise alors ce signal numérique ou analogique issu du traitement en fonction du mode de restitution désiré.

L'exemple qui va être maintenant décrit correspond à une analyse échographique d'un foetus, dans le domaine médical. Lors d'une telle analyse, le signal généré est sous forme ultra-sonore. Il est réfléchi sur le foetus à analyser et est réceptionné sur un capteur du type sonar. Le signal que l'on désire visualiser dans le cas d'une échographie est un signal visuel, qui se situe dans une échelle de gris. Le dispositif selon l'invention permet d'obtenir une limite de résolution radiométrique très fine, permettant ainsi une augmentation du contraste et autorisant un diagnostic fondé sur de meilleures bases. De plus, si on utilise comme système d'exploitation un écran de visualisation,variant entre le blanc et le noir, on observe une augmentation du contraste significative.

Le dispositif selon l'invention permet également une analyse d'image en couleur. En effet, on traite chacun des canaux spectraux correspondant aux signaux reçus au moyen du dispositif décrit précédemment. On visualise après traitement dans le domaine du visible la répartition spectrale de chacun des canaux. On obtient ainsi une restitution en couleur optimale .

Dans un autre exemple, on désire analyser au sein d'une radiographie prise par exemple par rayons X une zone très localisée. Or, au sein de cette zone localisée et de façon générale,le contraste est relativement faible Jusqu'à présent, les dispositifs ne permettaient en fait que de faire loupe sur ladite zone localisée et sans en augmenter le contraste. Le dispositif selon l'invention analyse par transmission de la lumière émise au travers de la radiographie de ladite zone localisée, et après calcul et traitement de signal, permet l'obtention sur l'écran de visualisation, ou sur photographie, de ladite zone localisée,mais avec une nouvelle échelle de contraste permettant une bien meilleure visualisation de la zone observée. Le contraste de ladite zone est de nouveau optimal. Outre la possibilité de faire loupe sur ladite zone, le dispositif selon l'invention permet également une augmentation du pouvoir de quantification du récepteur.

Ainsi, de la présente invention, se dégagent un certain nombre d'avantages que les dispositifs connus à ce jour ne permettaient pas d'obtenir, notamment :
- l'obtention d'un signal stable indépendamment de ses conditions d'émission et réception ;
- la facilité de traitement du signal et son amélioration du point de vue interprétation ;
- la comparaison possible indépendamment des conditions d'obtention et de chronologie ;
- l'utilisation d'un matériel peu sophistiqué .

Ainsi, le dispositif selon l'invention présente de très nombreuses applications, notamment :
- dans le domaine médical, en particulier en ce qui concerne la radiographie et l'échographie ;
- dans le domaine industriel , en particulier en ce qui concerne la télé-surveillance, le contrôle de qualité notamment lors de la détection de défauts sur une chaîne de fabrication,l'amélioration de capteurs de type caméra;
- dans le domaine de la robotique , lorsque le robot est associé à une vision artificielle ;
- dans le domaine grand-public , notamment en ce qui concerne les appareils photographiques , particulièrement lors de la prise de photo grâce au réglage de l'ouverture et de l'auto-focus et lors du tirage desdites photos lors de l'analyse couleur et de l'exposition permettant ainsi de déterminer et de caler les paramètres d'exposition de façon beaucoup plus rigoureuse . Ce dispositif s'applique également aux récepteurs de télévision,de radio et à tous les systèmes de télécommunication .

## Revendications

1/ Dispositif de transformation d'un signal sous forme d'ondes par stabilisation et réhaussement de la dynamique du dit signal , comportant :
- une source générant un flux d'ondes,susceptible de présenter des variations au cours du temps ;
- un récepteur des ondes transmises ou réfléchies, générées par la dite source,ledit récepteur étant destiné à transformer ces ondes en signaux électriques analogiques ou numériques ;
- un système d'exploitation du signal ainsi transformé,
<u>caractérisé</u> en ce que le dispositif comporte entre le récepteur et le système d'exploitation un ensemble réhausseur de la dynamique et stabilisateur du dit signal, constitué :
- de moyens pour mesurer des valeurs caractéristiques de la fonction représentative du signal issu du recepteur, choisies dans le groupe comprenant :
. le minimum et le maximum de cette fonction ;
. la moyenne logarithmique de cette fonction ;
. l'écart-type logarithmique de l'histogramme de cette fonction ;
. la variation logarithmique de cette fonction;
- de moyens pour determiner pour cette fonction, les uniques rapports d'homothétie $K_0$, $K_1$, $K_2$, $K_3$ dénommés coefficients invariants , c'est à dire les nombres réels $K_0$, $K_1$, $K_2$, $K_3$ tels qu'une loi de composition externe notée $\triangle$, qui à toute fonction f, représentative du signal, et à tout réel K, associe la fonction $K \triangle f$, définie par l'expression:
$K \triangle f = M - M (1 - \frac{f}{M})^K$
où M représente le maximum théorique de la fonction f, ait la meilleure plage dynamique; les rapports $K_0$, $K_1$, $K_2$, $K_3$ étant determinés comme suit :
. pour $K_0$ :
* on calcule pour le maximum $f_{max}$ et le minimum $f_{min}$ déterminés lors de l'une des étapes précédentes , la valeur littérale de la fonction $K \triangle f$ ;
* on détermine également littéralement la valeur de la différence des deux expressions calculées au cours de l'étape précédente :
$K \triangle f_{max} - K \triangle f_{min}$
* on dérive par rapport au réel K l'expression obtenue ;
* on identifie alors la fonction dérivée obtenue à zéro, afin de déterminer le réel $K_0$ ;
. pour $K_1$ :
* on calcule la moyenne au sens classique m' de la fonction

$$- \text{Log} \left( \frac{M - f}{M} \right)$$

* on en déduit la moyenne logarithmique de la fonction f à l'aide de la formule :
$m = M - M e^{-m'}$
* on détermine le réel $K_1$ comme étant la solution de l'équation $K_1 \triangle m = \frac{M}{2}$
. pour $K_2$ :
* on calcule la moyenne au sens classique m de la fonction

$$- \text{Log} \left( \frac{M - f}{M} \right)$$

ainsi que l'écart-type au sens classique $\sigma'$ de son histogramme;
* on en déduit la moyenne logarithmique de la fonction f à l'aide de la formule :
$m = M - M e^{-m'}$
ainsi que l'écart-type logarithmique $\sigma$ de l'histogramme de la function f par la formule
$\sigma = M = M e^{-\sigma'}$
* on détermine alors littéralement la valeur de la différence des expressions :

$$K \triangle \left( m + \sigma - \frac{m \sigma}{M} \right) \text{ et } K \triangle \left( M \frac{m - \sigma}{M - \sigma} \right)$$

* on dérive par rapport au réel K l'expression obtenue ;
* on identifie alors la fonction dérivée obtenue à zéro, afin de déterminer le réel K ;
. pour $K_3$ :
* on calcule la moyenne au sens classique m de la fonction

$$- \text{Log} \ ( \frac{M - f}{M} )$$

ainsi que la variation classique v ' définie par l'expression

$$\sum \left| m' + \text{Log} \ (\frac{M - f}{M}) \right|$$

pixels de l'image
où | | désigne la valeur absolue ;
* on en déduit la moyenne logarithmique de la fonction f par la formule :
$v = M - M e^{-v'}$
* on détermine alors littéralement la valeur de la différence des expressions :

$$K \triangle ( m + v - \frac{mv}{M} ) \quad \text{et} \quad K \triangle ( M \frac{m - v}{M - v} )$$

* on dérive par rapport au réel K l'expression obtenue ;
* on identifie alors la fonction dérivée obtenue à zéro afin de determiner le réel $K_3$ ;
- de moyens pour calculer les fonctions $K_0 \triangle f$, $K_1 \triangle f$, $K_2 \triangle f$ et $K_3 \triangle f$ correspondantes ;
- de moyens pour la transmission au système d'exploitation des valeurs ainsi déterminées.

2/ Dispositif de transformation d'un signal selon la revendication 1, caractérisé en ce que l'on détermine les valeurs caractéristiques du signal, qu'il soit numérique ou analogique, à savoir :
- le maximum et le minimum du signal ;
- sa moyenne logarithmique ;
- l'écart-type logarithmique de l'histogramme de ce signal ;
- la variation logarithmique de ce signal ,
au moyen d'un premier organe de calcul.

3/ Dispositif de transformation du signal selon l'une des revendications 1 et 2, caractérisé en ce que le calcul des réels $K_0$, $K_1$, $K_2$ et $K_3$ est effectué au moyen d'un second organe de calcul.

4/ Dispositif de transformation du signal selon l'une des revendications 1 à 3, caractérisé en ce que le calcul de la valeur de $K_0 \triangle f$, $K_1 \triangle f$, $K_2 \triangle f$ et $K_3 \triangle f$ est effectué au moyen d'un troisième organe de calcul .

5/ Dispositif de transformation du signal selon l'une des revendications 1 à 4, caractérisé en ce que le dit signal est une onde électromagnétique appartenant au groupe constitué par les ondes acoustiques, ultra-sonores, infra-rouges, visibles, ultra-violet, rayons X et gamma.

0263765

FIG.1

FIG. 2

signal f

DETERMINATION VALEUR MOYENNE CLASSIQUE

$m'$

DETERMINATION VALEUR MOYENNE LOGARITHMIQUE

$m$

CALCUL DE $K_1$

$K_1$

CALCUL DE $K_1 \triangle f$

$K_1 \triangle f$

FIG. 3

0263765

## FIG.4

## FIG.5

Office européen
des brevets

## RAPPORT DE RECHERCHE EUROPEENNE

Numero de la demande

EP  87 42 0266

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 790 706  (T.J. GUBALA et al.) <br> * Colonne 1, lignes 29-62; colonne 2, ligne 41 - colonne 4, ligne 4 * <br> --- | 1,2,5 | H 04 N   5/20 |
| A | DE-A-3 408 337  (CANON) <br> * Page 8, alinéa 1 - page 10, alinéa 1; pages 11-18, chapitre: "1. Ausführungsform" * <br> --- | 1 | |
| A | EP-A-0 091 868  (THOMSON-CSF) <br> * Page 1, ligne 1 - page 3, ligne 19 * <br> ----- | 1 | |

DOMAINES TECHNIQUES
RECHERCHES (Int. Cl.4)

H 04 N
G 06 F

Le présent rapport a été établi pour toutes les revendications

| Lieu de la recherche | Date d'achèvement de la recherche | Examinateur |
|---|---|---|
| LA HAYE | 25-01-1988 | MARCHAU M.F. |